# EUROPÄISCHE PATENTANMELDUNG

(11) **EP 4 625 761 A1**
(43) Veröffentlichungstag der Anmeldung: **01.10.2025**
(21) Anmeldenummer: 25161378.2
(22) Anmeldetag: 03.03.2025
(51) Int. Cl.: H02J 50/12, H02J 50/60

(54) **VERFAHREN ZUM EINSTELLEN EINES BETRIEBSPARAMETERS EINER VORRICHTUNG ZUM INDUKTIVEN ÜBERTRAGEN ELEKTRISCHER LEISTUNG UND VORRICHTUNG**

(30) Priorität: 06.03.2024 DE 102024106409
(71) Anmelder: Turck Holding GmbH, 58553 Halver (DE)
(72) Erfinder: Seliger, Christian, 08315 Lauter-Bernsbach (DE); Gerz, Tobias, 08340 Schwarzenberg (DE)
(74) Vertreter: DTS Patent- und Rechtsanwälte PartmbB

(57) **Zusammenfassung**

Die vorliegende Erfindung betrifft ein Verfahren zum Einstellen zumindest eines Betriebsparameters einer Vorrichtung (10, 20, 30) zum induktiven Übertragen elektrischer Leistung, bei dem zumindest ein Schwingkreis (10) der Vorrichtung mit einer Mess-Ansteuerfrequenz (f_{AC}) betrieben wird; wobei die Mess-Ansteuerfrequenz (f_{AC}) über einen vorgegebenen Messbereich so variiert wird, dass eine Messreihe erfasst wird, wobei die Messreihe zumindest einen Betriebs-Messwert (I_{IN}, Vₒᵤₜ) in Abhängigkeit von der Mess-Ansteuerfrequenz betrifft; in Abhängigkeit von der Messreihe ein Vorrichtungsparameter bestimmt wird; und in Abhängigkeit von dem bestimmten Vorrichtungsparameter der Betriebsparameter bestimmt und eingestellt wird. Dabei betrifft der Betriebsparameter eine Betriebsfrequenz für eine induktive Leistungsübertragung, zumindest einen Schwellenwert für einen Start und/oder ein Beenden der induktiven Leistungsübertragung und/oder zumindest einen Schwellenwert für eine Fremdobjekterkennung bei der induktiven Leistungsübertragung. Die Erfindung betrifft ferner eine Vorrichtung (10, 20, 30) zum induktiven Übertragen elektrischer Leistung

## Beschreibung

Die vorliegende Erfindung betrifft ein Verfahren zum Einstellen zumindest eines Betriebsparameters einer Vorrichtung zum induktiven Übertragen elektrischer Leistung sowie eine Vorrichtung zum induktiven Übertragen elektrischer Leistung.

Die Erfindung liegt auf dem Gebiet der induktiven Koppler, die eine kontaktlose Übertragung elektrischer Leistung erlauben. Der Wirkungsgrad einer induktiven Leistungsübertragung zwischen induktiv gekoppelten Systemen ist unter anderen davon abhängig, wie genau die Schwingkreise der Primärseite (Primärschwingkreis, Sender) und der Sekundärseite (Sekundärschwingkreis, Empfänger) zur Energieübertragung aufeinander abgestimmt sind.

Die Bauelemente der Primär- und Sekundärschwingkreise sind allerdings fertigungsbedingten Toleranzen unterworfen, was wiederum Auswirkung auf die Funktionsfähigkeit der Leistungsübertragung und insbesondere die Höhe der Leistungsverluste bei der Übertragung hat. Der Einfluss der Bauteiltoleranzen kann daher den Wirkungsgrad der übertragbaren Energie von der Primär- auf die Sekundärseite beeinträchtigen.

Eine besondere Schwierigkeit kann darin bestehen, dass die elektrischen Bauteile typischerweise vergossen werden, sodass sie nicht beliebig modifiziert oder ausgetauscht werden können.

Aus der WO 2009/089253 A1 ist eine induktive Stromversorgung mit Taktzyklussteuerung bekannt. Dabei kann ein Speicher vorgesehen sein, in dem spezifische Resonanzfrequenzen für verschiedene Sekundärgeräte sowie weitere Informationen wie eine maximale und eine minimale Betriebsfrequenz abgelegt sein.

Die EP 2 690 739 A2 beschreibt eine Schaltung zur induktiven Leistungsübertragung. Dabei weist eine primäre Einheit ein Resonanz-Netzwerk und eine primäre Schaltung auf, die eine erste beziehungsweise zweite Resonanzfrequenz aufweisen. Die Schaltung wird dann mit einem Treibersignal betrieben, dessen Frequenz zwischen der ersten und der zweiten Resonanzfrequenz liegt.

Es ist eine Aufgabe der vorliegenden Erfindung, ein Verfahren und eine Vorrichtung der eingangs genannten Art bereitzustellen, wobei der Einfluss von Bauteiltoleranzen, insbesondere hinsichtlich der Frontspuleninduktivität des Energiesenders (Primärseite) beziehungsweise des Energieempfängers (Sekundärseite) verringert wird.

Diese Aufgabe wird erfindungsgemäß gelöst durch ein Verfahren mit den Merkmalen des Anspruchs 1 sowie eine Vorrichtung mit den Merkmalen des nebengeordneten Vorrichtungsanspruchs. Vorteilhafte Ausgestaltungen sind in den Unteransprüchen angegeben.

Danach wird die Aufgabe gelöst durch ein Verfahren zum Einstellen zumindest eines Betriebsparameters einer Vorrichtung zum induktiven, das heißt insbesondere kontaktlosen, Übertragen elektrischer Leistung, bei dem zumindest ein Schwingkreis der Vorrichtung mit einer Mess-Ansteuerfrequenz betrieben wird. Dabei wird die Mess-Ansteuerfrequenz über einen vorgegebenen Messbereich so variiert, dass eine Messreihe erfasst wird, wobei die Messreihe zumindest einen Betriebs-Messwert in Abhängigkeit von der Mess-Ansteuerfrequenz betrifft. Beispielsweise kann die Mess-Ansteuerfrequenz in vorgegebenen Schritten verändert werden und eine Reihe verschiedener Mess-Ansteuerfrequenzen kann nacheinander für jeweils eine vorgegebene Dauer eingestellt werden. In Abhängigkeit von der Messreihe, insbesondere durch eine Auswertung der Messreihe, wird ein Vorrichtungsparameter bestimmt und in Abhängigkeit von dem bestimmten Vorrichtungsparameter wird der Betriebsparameter bestimmt und eingestellt.

Eine Mess-Ansteuerfrequenz kann dabei insbesondere eine Primär-Ansteuerfrequenz sein, mit welcher der Primär-Schwingkreis angeregt wird. Insbesondere wird die Mess-Ansteuerfrequenz dabei nicht separat messtechnisch erfasst; vielmehr kann ein Mikrocontroller diese als einstellbare Frequenz ausgeben.

Um die Messreihe zu erfassen, kann die Mess-Ansteuerfrequenz in vorgegebenen Schritten variiert werden, etwa durch schrittweise Erhöhung von einer minimalen zu einer maximalen Frequenz des Messbereichs. Die Mess-Ansteuerfrequenz kann dabei bei jedem Schritt für eine vorgegebene Dauer eingestellt werden, sodass besondere Effekte während des Einschwingens des Schwingkreises vermieden werden können.

Durch ein Auswerten der Messreihe kann dann der Vorrichtungsparameter bestimmt werden. Beispielsweise können lokale und/oder globale Extremwerte der Messreihe bestimmt werden. Die physikalischen Eigenschaften der Vorrichtung und insbesondere des Primär-Schwingkreises können so charakterisiert werden, insbesondere mittels des Vorrichtungsparameters. Beispielsweise kann eine Resonanzfrequenz des Primär-Schwingkreises bestimmt werden. In Abhängigkeit von diesem Wert kann dann der Betriebsparameter eingestellt werden.

Die Erfindung erlaubt es beispielsweise, die Vorrichtung zur induktiven Leistungsübertragung so zu betreiben, dass Parameter zur Leistungsübertragung beispielsweise in der Firmware vorgenommen werden, um die Leistungsübertragung zu optimieren. Bei bekannten Systemen werden dagegen Bauelemente des Primär- und Sekundärschwingkreises typischerweise so ausgelegt, dass sie eine größere Leistung ermöglichen und damit gegebenenfalls Schwankungen durch Fertigungstoleranzen ausgleichen können. Die Erfindung erlaubt daher ein erweitertes Spektrum an Einsatzmöglichkeiten, um mit verschiedenen Limitierungen beziehungsweise Ergänzungen in der Endapplikation umzugehen.

Beispielsweise kann eine maximal übertragbare Leistung oder ein Übertragungsabstand zwischen Primär- und Sekundärseite konfiguriert werden. Es können ergänzende Firmware-Versionen angeboten werden, um Funktionsumfang der Vorrichtung anzupassen.

Das Einstellen des Betriebsparameters kann insbesondere als Teil des Herstellungsprozesses der Vorrichtung erfolgen. Dabei kann der Betriebsparameter für das ungekoppelte Primärgerät oder für ein System von gekoppeltem Primär- und Sekundärgerät bestimmt werden und der Betriebsparameter kann beispielsweise in einer Firmware als Parameter des individuellen Geräts hinterlegt werden. Der Betriebsparameter kann daher für ein Primärgerät selbst oder für eine spezifische Kombination von Primär- und Sekundärgerät bestimmt und fest hinterlegt werden.

Das Einstellen des Betriebsparameters kann ferner während des Einsatzes der Vorrichtung in der End-Applikation erfolgen. Insbesondere erfolgt dabei die Ermittlung des Betriebsparameters des Primärgeräts in einem nicht gekoppelten Zustand, das heißt ohne eine gleichzeitige induktive Übertragung von Leistung an ein Sekundärgerät. Durch ein Bestimmen des Betriebsparameters direkt bei der Anwendung können eventuelle Umwelteinflüsse auf die Funktionsfähigkeit der Primärseite berücksichtigt werden, etwa abhängig von einer besonderen Einbausituation oder Störungen durch benachbarte Geräte. In einem weiteren Schritt können die Eigenschaften eines Sekundärgeräts in einem gekoppelten Zustand mit der nun bekannten Primärseite ermittelt werden. Hierbei werden ebenfalls applikationsspezifische Einflüsse zur Systemoptimierung berücksichtigt. Der Betriebsparameter kann dann für das gekoppelte System optimiert werden.

Bei einer Ausbildung des Verfahrens ist die Vorrichtung als Primärgerät ausgebildet, das als Sender zur induktiven Leistungsübertragung betreibbar ist. Das Primärgerät kann dabei insbesondere in einem ungekoppelten Zustand betrieben werden. Ein ungekoppelter Zustand ist insbesondere dadurch gekennzeichnet, dass das Primärgerät nicht zur induktiven Leistungsübertragung mit einem Sekundärgerät gekoppelt ist.

Bei einer weiteren Ausbildung kann die Vorrichtung als Primärgerät ausgebildet sein, das mit einem Sekundärgerät gekoppelt ist.

Bei einer weiteren Ausbildung kann die Vorrichtung als System mit einem Primärgerät und einem Sekundärgerät ausgebildet sein, die als Sender und Empfänger zur induktiven Leistungsübertragung betreibbar sind.

Insbesondere können das Primärgerät und das Sekundärgerat eines Systems in einem ungekoppelten oder in einem zur induktiven Leistungsüberragung gekoppelten Zustand betrieben werden.

Bei einer weiteren Ausbildung ist der Schwingkreis der Vorrichtung als Primär-Schwingkreis des Primärgeräts ausgebildet. Dabei kann optional der Schwingkreis in einem ungekoppelten Zustand oder in einem gekoppelten Zustand betrieben werden.

Bei einer Weiterbildung der Erfindung kann der Betriebsparameter eine Betriebsfrequenz für eine induktive Leistungsübertragung betreffen, insbesondere eine Ansteuerfrequenz zum Betreiben des Primärschwingkreises, beispielsweise eine Startfrequenz für die Leistungsübertragung an eine induktiv gekoppelte Sekundärseite. Der Betriebsparameter kann ferner eine minimale Ansteuerfrequenz betreffen, die üblicherweise bei wenigstens 100 kHz liegt, beispielsweise bei 105 kHz, und bei deren Unterschreiten das System bei der induktiven Leistungsübertragung in einem ungünstigen Arbeitspunkt beziehungsweise Wirkungsgrad betrieben würde. Der Betriebsparameter kann ferner zumindest einen Schwellenwert für einen Start und/oder ein Beenden der induktiven Leistungsübertragung betreffen, etwa Schwellwerte der induzierten Sekundärspannung für eine Freigabe oder einen Abbruch einer Leistungsübertragung von der Primär- zur Sekundärseite oder für eine Freigabe zur Leistungsversorgung eines sekundärseitig angeschlossenen Verbrauchers. Er kann ferner zumindest einen Schwellenwert für eine Fremdobjekterkennung (*foreign object detection,* FOD) bei der induktiven Leistungsübertragung betreffen. Dadurch werden vorteilhafterweise besonders relevante Parameter für den Betrieb des induktiven Kopplers angepasst.

Bei einer Ausbildung ist der Betriebs-Messwert ein elektrischer Betriebs-Messwert, der beispielsweise eine Primär-Eingangs-Stromstärke eines Primär-Geräts eines induktiven Kopplers und/oder eine Sekundär-Ausgangs-Spannung eines Sekundär-Geräts eines induktiven Kopplers betrifft.

Bei einer weiteren Ausbildung betrifft der in Abhängigkeit von der Messreihe bestimmte Vorrichtungsparameter eine Resonanzfrequenz eines Primär-Schwingkreises eines Primär-Geräts eines induktiven Kopplers. Dabei kann der Betriebs-Messwert eine Primär-Eingangs-Stromstärke des Primär-Gerätes betreffen und anhand der Messreihe kann ein Minimum der Primär-Eingangs-Stromstärke bestimmt werden, um die Resonanzfrequenz zu bestimmen. Das Minimum kann beispielsweise mittels eines mathematischen Fits der Messreihe bestimmt werden, etwa mittels eines Verfahrens der geringsten Quadrate (Least-Square-Verfahren).

Bei einer Weiterbildung wird der Betriebsparameter anhand einer in einem Speicher abgelegten Tabelle (Look-Up-Table) oder Kurve oder anhand einer Berechnung in Abhängigkeit von dem Vorrichtungsparameter bestimmt.

Bei einer Ausbildung erfolgt das Einstellen des Betriebsparameters in einer Firmware der Vorrichtung, in einem Steuergerät oder in einer weiteren Speichereinheit, die insbesondere von der Vorrichtung umfasst ist.

Bei einer weiteren Ausbildung wird das Verfahren ausgeführt, wenn eine unbekannte Kombination eines Primärgeräts mit einem Sekundärgerät induktiv gekoppelt wird. Dabei kann vorgesehen sein, dass bestimmte Kombinationen von Primär- und Sekundärgeräten identifiziert und gespeichert werden, etwa in einer Speichereinheit des Primär- und/oder des Sekundärgeräts. Eine noch nicht registrierte Kombination kann dann anhand von Identifikationsmerkmalen von Primär- und Sekundärgerät erkannt werden.

Ferner kann das Verfahren in vorgegebenen Zeitabständen oder auf ein Anforderungssignal wiederholt ausgeführt wird. Ein Anforderungssignal kann beispielsweise automatisch erzeugt oder von einem Benutzer eingegeben werden. Dabei wird insbesondere eine Zeitreihe des Betriebs-Messwerts erfasst und gespeichert. So kann beispielsweise eine zeitliche Entwicklung des Betriebs-Messwerts analysiert werden, etwa um eine Verschlechterung der Übertragungseigenschaften zu erkennen.

Eine Vorrichtung zum induktiven Übertragen elektrischer Leistung umfasst einen Schwingkreis und eine Steuereinheit. Dabei ist die Steuereinheit dazu eingerichtet, die Vorrichtung so anzusteuern, dass:
- der Schwingkreis mit einer Mess-Ansteuerfrequenz betrieben wird;
- die Mess-Ansteuerfrequenz über einen vorgegebenen Messbereich variiert wird;
- eine Messreihe mit einem Betriebs-Messwert in Abhängigkeit von der Mess-Ansteuerfrequenz erfasst wird;
- in Abhängigkeit von der Messreihe ein Vorrichtungsparameter bestimmt wird; und
- in Abhängigkeit von dem bestimmten Vorrichtungsparameter zumindest ein Betriebsparameter der Vorrichtung, insbesondere ein Betriebsparameters für die induktive Leistungsübertragung, bestimmt und eingestellt wird.

Wie oben bereits erläutert, kann der Betriebsparameter unterschiedliche Parameter betreffen, beispielsweise eine Betriebsfrequenz für eine induktive Leistungsübertragung, insbesondere eine Ansteuerfrequenz zum Betreiben des Primärschwingkreises, beispielsweise eine Startfrequenz für die Leistungsübertragung. Der Betriebsparameter kann ferner eine minimale Ansteuerfrequenz betreffen. Er kann ferner zumindest einen Schwellenwert für einen Start und/oder ein Beenden der induktiven Leistungsübertragung betreffen und/oder einen Schwellenwert für eine Fremdobjekterkennung.

Bei dem Verfahren können insbesondere mehrere Betriebsparameter bestimmt und eingestellt werden.

Die Vorrichtung ist insbesondere dazu eingerichtet, das vorliegend beschriebene Verfahren auszuführen. Sie weist daher die gleichen Vorteile auf wie das Verfahren und kann in analoger Weise weitergebildet werden, wie für das Verfahren beschrieben.

Die Vorrichtung kann beispielsweise als Primärgerät zur induktiven Kopplung mit einem Sekundärgerät ausgebildet sein. Die Vorrichtung kann ferner als System mit einem Primär- und einem Sekundärgerät ausgebildet sein, die ferner miteinander induktiv zur Leistungsübertragung gekoppelt sein können.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Darstellung eines Primär- und eines Sekundärschwingkreises;
- Fig. 2: ein Diagramm mit dem Ablauf eines Programms zum "Anlernen" (Teaching) des Betriebsparameters;
- Fig. 3A und 3B: ein Ersatzschaltbild und simulierte Messdaten für ein ungekoppeltes Primärgerät;
- Fig. 4A bis 4B: ein Ersatzschaltbild und simulierte Messdaten für ein unbekanntes Primärgerät, das mit einem bekannten Sekundärgerät gekoppelt ist; und
- Fig. 5A bis 5B: ein Ersatzschaltbild und simulierte Messdaten für ein bekanntes Primärgerät, das mit einem unbekannten Sekundärgerät gekoppelt ist.

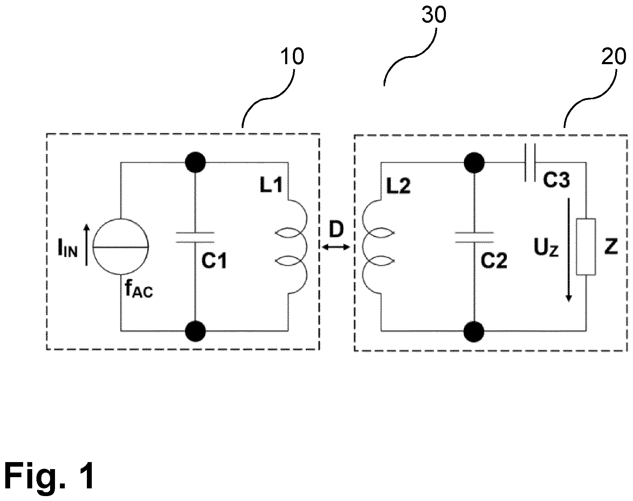

Mit Bezug zu Fig. 1 wird eine schematische Darstellung eines Primär- und eines Sekundärschwingkreises in Ersatzschaltbildern erläutert. Insbesondere bilden Primär- und Sekundärschwingkreis einen induktiven Koppler zur kontaktlosen elektrischen Leistungsübertragung von der Primärseite (Sender) zur Sekundärseite (Empfänger).

Der Primär-Schwingkreis der Primärseite 10 ist bei dem Beispiel als Parallelschwingkreis ausgeführt. Er umfasst eine Kapazität C1 und eine parallel dazu geschaltete Induktivität L1. Es wird ferner ein Eingangsstrom I_{IN} mit einer Anregungsfrequenz f_{AC} bereitgestellt.

Der Sekundär-Schwingkreis 20 weist bei dem Beispiel eine Kapazität C2 und eine parallel dazu geschaltete Induktivität L2 auf. Ferner ist über eine in Serie geschaltete weitere Kapazität C3 eine Last mit einer Impedanz Z vorgesehen, über der eine Spannung U_{Z} abfällt.

Die Induktivitäten L1, L2 der Primärseite 10 und Sekundärseite 20 sind in einem Abstand D angeordnet.

Bei dem Ausführungsbeispiel wird davon ausgegangen, dass sich der Parallelschwingkreis bei Resonanz - wenn er also mit seiner charakteristischen Resonanzfrequenz angeregt wird - wie ein ohmscher Widerstand verhält und dass die Impedanz des Parallelkreises bei Resonanz ihren größten Wert annimmt. Dementsprechend ist bei Resonanz der in den Kreis fließende Gesamtstrom am kleinsten.

Um auf der Primärseite eine Leistungsanpassung für die Sekundärseite vorzunehmen, insbesondere aufgrund der gerätespezifischen Sekundärimpedanz Z, werden typischerweise Bauteile so dimensioniert, dass sie an die Induktivität L2 oder die Kapazitäten C2, C3 auf der Sekundärseite angepasst sind. Um bestimmte Werte für den Abstands- und Leistungsbereich zu erhalten, wird zur optimalen Energieübertragung die Ansteuerfrequenz des Primärschwingkreises (f_{AC}) so nachgeregelt, dass eine gewünschte Leistung übertragen wird.

Bei der Fertigung der Schwingkreise sind neben den Toleranzbereichen für die Frontspuleninduktivitäten der Primär- und der Sekundärseite L1, L2 ferner die Toleranzen für die Parallel- und/oder Serienkapazitäten C1, C2, C3 zu berücksichtigen, die ebenfalls die Leistungsanpassung der Schwingkreise auf die Sekundärimpedanz Z beeinflussen.

Das Bestimmen von gerätespezifischen Eigenschaften des Primär- und des Sekundärschwingkreises kann bei dieser Anordnung dadurch erschwert sein, dass die Bauteile im Endgerät vergossenen sind. Es wird daher ein Messverfahren nach dem folgenden Prinzip umgesetzt:
Zunächst wird eine charakteristische Resonanzfrequenz des Primär- und Sekundärschwingkreises ermittelt. Dazu wird die Ansteuerfrequenz f_{AC} des Primärschwingkreises variiert und eine Messung des Eingangsstroms I_{IN} in den Primärschwingkreis wird ausgewertet. Ferner wird auch die Ausgangsspannung des Sekundärschwingkreises U_{Z} berücksichtigt.

Dabei wird von einem konstanten Abstand D zwischen Primär- 10 und Sekundärseite 20 ausgegangen, insbesondere von einem Abstand D = 0 mm.

Während der Messung wird kein Verbraucher durch die Sekundärseite versorgt, das heißt, die Sekundärseite befindet sich im Leerlauf.

Ferner wird der Primärschwingkreis 10 mit einer maximalen Zwischenkreisspannung versorgt, beispielsweise mit 20 V Gleichspannung.

Ausgehend von den so bestimmbaren charakteristischen Eigenschaften des Primärgeräts 10, des Sekundärgeräts 20 beziehungsweise des von diesem gebildeten Systems 30 können Firmware-Parameter angepasst werden.

Ein solcher Parameter kann eine Ansteuerfrequenz des Primärschwingkreises 10 sein, insbesondere eine Startfrequenz zur Energieübertragung mit einer Sekundärseite 20. Ferner können als Parameter Schwellwerte eingestellt werden, in Abhängigkeit von denen mit einer induzierten Sekundärspannung geprüft wird, ob die Energieübertragung von der Primär- 10 zur Sekundärseite 20 freigegeben oder abgebrochen werden soll beziehungsweise ob eine Leistungsversorgung eines sekundärseitig angeschlossenen Verbrauchers freigegeben oder abgebrochen werden soll. Ferner können als Parameter Schwellwerte für eine Fremdobjekterkennung eingestellt werden.

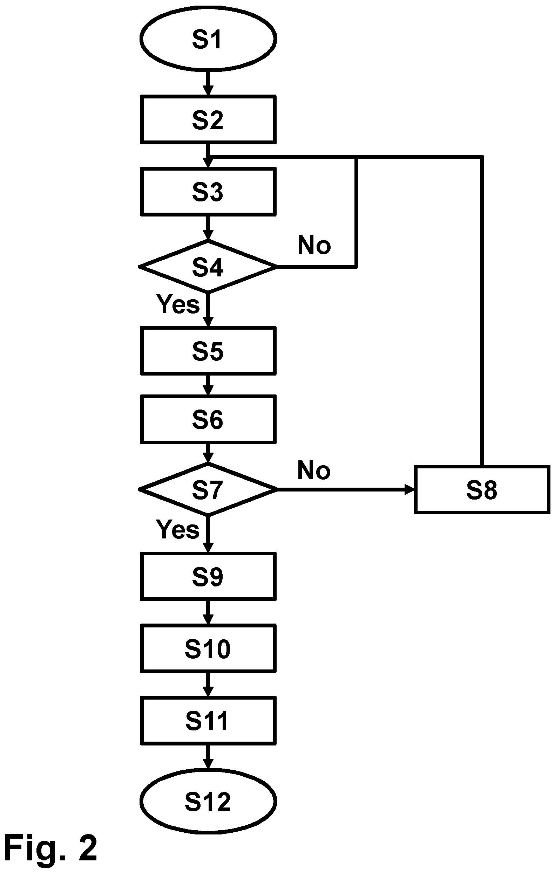

Mit Bezug zu Fig. 2 wird ein Diagramm mit dem Ablauf eines Programms zum "Anlernen" (Teaching) des Betriebsparameters erläutert. Dabei wird von einem System wie dem oben erläuterten ausgegangen und es werden Schritte des Programmablaufdiagramms zur Ermittlung gerätespezifischen Eigenschaften des Primär- und des Sekundärschwingkreises beschrieben.

Bei einem ersten Schritt S1 beginnt der Teaching-Ablauf mit dem Initialisieren des Systems.

Bei dem Beispiel wird initial eine aktuelle Ansteuerfrequenz des Primärschwingkreises auf einen vorgegebenen Minimalwert gesetzt, beispielsweise bei einer Ansteuerfrequenz von 100 kHz.

Ferner wird bei dem Beispiel der Primärschwingkreis mit der maximalen Zwischenkreisspannung versorgt, beispielsweise mit 20 V Gleichspannung.

Ferner wird bei dem Beispiel ein fester Abstand D des Primärschwingkreises zur Sekundärseite eingestellt.

Um die Primärseite im ungekoppelten Zustand zu vermessen, wird ein bestimmter größerer Abstand eingestellt, in dem Beispiel etwa D > 60 mm; bei dem Beispiel wird dann davon ausgegangen, dass keine induktive Leistungsübertragung erfolgt. Um die Primärseite im gekoppelten Zustand zu vermessen, wird ein Abstand D von 0 mm eingestellt, das heißt, die Sekundärseite liegt im Wesentlichen an der Primärseite an.

Bei dem Beispiel soll die Vermessung im gekoppelten Zustand erfolgen, das heißt, es ist ein Abstand von D = 0 mm eingestellt.

Ferner ist bei dem Beispiel eine Datenübertragung zwischen Primär- und Sekundärseite aktiviert; es kann etwa eine Datenübertragung über IO-Link erfolgen.

In dem gekoppelten Zustand ist zudem vorgesehen, dass der Ausgang der Sekundärseite aktiv ist, etwa mit einer Ausgangsspannung von V_{OUT} = 24 V Gleichspannung.

Es werden vorgegebene Werte einer unteren und einer oberen Ansteuerfrequenz gesetzt. Der minimale und maximale Wert definieren einen Messbereich, in dem Messungen zum Ermitteln der gerätespezifischen Eigenschaften ausgeführt werden.

In einem weiteren Schritt S2 wird ein minimaler Wert der Ansteuerfrequenz des Primärschwingkreises eingestellt; bei dem Beispiel wird ein Wert von 120 eingestellt, es können aber auch andere geeignete Werte verwendet werden.

In einem weiteren Schritt S3 wird der Primärschwingkreis mit der eingestellten Ansteuerfrequenz angeregt. In einem weiteren Schritt S4 wird überprüft, ob die Anregung für eine festgelegte Einschwingdauer erfolgt ist, wobei von beispielsweise 10 ms als Einschwingdauer ausgegangen werden kann.

In einem weiteren Schritt S5, der insbesondere nach Ablauf der Einschwingdauer ausgeführt wird, wird die Stromstärke, welche in den Primärschwingkreis fließt, erfasst und in einem weiteren Schritt S6 zusammen mit dem aktuell eingestellten Wert der Ansteuerfrequenz im Speicher der Primärseite abgelegt.

In einem weiteren Schritt S7 wird geprüft, ob die aktuell eingestellte Ansteuerfrequenz der vorgegebenen maximalen Ansteuerfrequenz entspricht beziehungsweise ob die Messung bereits über den gesamten definierten Messbereich ausgeführt worden ist. So lange dies noch nicht der Fall ist, wird in einem weiteren Schritt S8 die Ansteuerfrequenz um einen vorgegeben beziehungsweise einstellbaren Wert einer Schrittweite der Ansteuerfrequenz erhöht, beispielsweise um ein Inkrement von 1 kHz, und die Messung wird mit der neuen Ansteuerfrequenz ab Schritt S3 wiederholt.

Wenn der obere Wert der Ansteuerfrequenz, beispielsweise 150 kHz erreicht ist, wird die so erfasste Messreihe in einem weiteren Schritt S9 ausgewertet; bei dem vorliegenden Ausführungsbeispiel wird dazu der minimale Wert der erfassten Stromstärke bestimmt. In einem Schritt S10 wird dem bestimmten minimalen Wert der erfassten Stromstärke die entsprechende Ansteuerfrequenz zugeordnet.

In einem weiteren Schritt S11 wird die so ermittelte Ansteuerfrequenz, die insbesondere einer Resonanzfrequenz des Primärschwingkreises der Vorrichtung in der gegebenen Konfiguration entspricht, genutzt, um einen Betriebsparameter der Vorrichtung zu ermitteln und anzupassen.

Bei dem Betriebsparameter kann es sich beispielweise um eine Ansteuerfrequenz des Primärschwingkreises handelt, etwa eine Betriebsfrequenz zum Betrieb in dem gekoppelten System, insbesondere eine Startfrequenz für eine induktive Leistungsübertragung an eine gekoppelte Sekundärseite. Alternativ oder zusätzlich können Schwellwerte für die induzierte Sekundärspannung definiert werden, in Abhängigkeit von denen eine induktive Leistungsübertragung von der Primär- zur Sekundärseite freigegeben oder abgebrochen wird und/oder in Abhängigkeit von denen eine Leistungsversorgung eines sekundärseitig angeschlossenen Verbrauchers freigegeben oder abgebrochen wird. Alternativ oder zusätzlich können Schwellwerte bestimmt und eingestellt werden, anhand derer eine Fremdobjekterkennung ausgeführt wird, insbesondere um zu erkennen, ob ungewollte Leistung an ein metallisches Fremdobjekt abgegeben wird.

Bei einem weiteren Schritt S12 wird der Teaching-Ablauf beendet. Insbesondere kann das System anschließend in einen Modus der elektrischen Leistungsübertragung zurückversetzt werden.

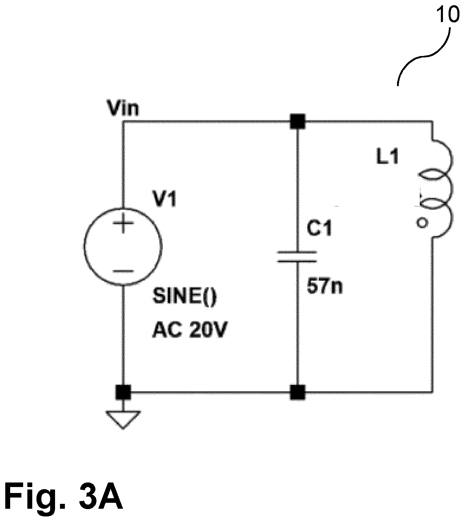

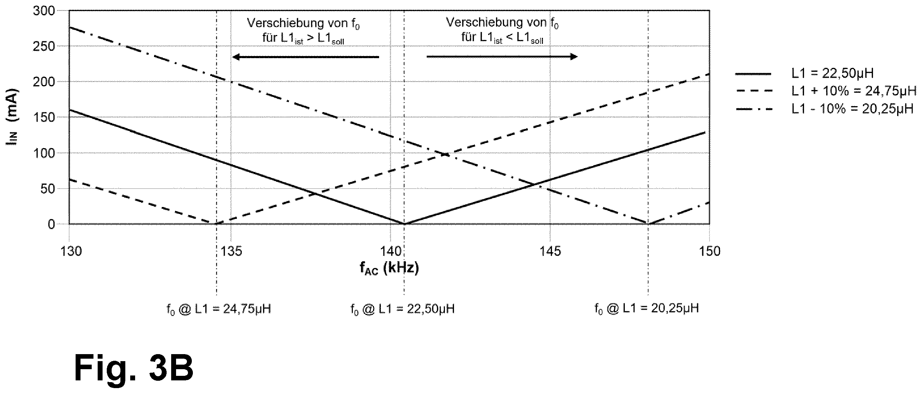

Mit Bezug zu den Fig. 3A und 3B werden ein Ersatzschaltbild und simulierte Messdaten für ein ungekoppeltes Primärgerät erläutert. Dabei wird von den obigen Erläuterungen ausgegangen und es werden nur Unterschiede beziehungsweise genauer dargestellte Details näher erläutert.

Bei dem in Fig. 3A gezeigten Fall umfasst das Primärgerät 10 einen Parallelschwingkreis, bei dem eine Spule mit einer Induktivität L1 und ein Kondensator mit einer Kapazität C1 von 57 nF parallel verschaltet sind. Bei dem Beispiel wird dieser Schwingkreis angeregt mit einer Ansteuerfrequenz f_{AC}, wobei ein sinusförmiges Ansteuersignal mit 20 V Spannung angelegt wird. Zur Vereinfachung wird vorliegend davon ausgegangen, dass keine Sekundärseite mit der Primärseite gekoppelt ist; beispielsweise kann eine eventuell vorhandene Sekundärseite mehr als 60 mm von der Sekundärseite entfernt sein.

Die Messung an diesem Primär-Schwingkreis erfolgt in der oben angegebenen Weise, indem die Ansteuerfrequenz in Schritten von 1 kHz von 100 kHz bis 150 kHz verändert wird.

Bei dem Diagramm der Fig. 3B ist der Verlauf des primärseitigen Eingangsstroms I_{IN} in mA in Abhängigkeit von der Ansteuerfrequenz f_{AC} gezeigt.

Die drei gezeigten Kurven entsprechen den Ergebnissen einer Simulation mit einer Induktivität L1 von 22,50 µH, 20,25 µH beziehungsweise 24,75 µH. Dies entspricht einer Induktivität von 22,50 µH plus oder minus 10%, was ungefähr einer üblichen Fertigungstoleranz für ein entsprechendes Bauteil entspricht.

Dem Diagramm der Fig. 3B ist zu entnehmen, dass die drei Kurven unterschiedliche Minima des Eingangsstroms I_{IN} in Abhängigkeit von der Ansteuerfrequenz f_{AC} aufweisen, nämlich bei einer umso niedrigeren Frequenz, je größer die Induktivität L1 ist. Umgekehrt liegt das Minimum umso höher, je kleiner die Induktivität L1 ist. Die Frequenz f_{AC}, bei der die primärseitige Eingangsstromstärke I_{IN} ihr Minimum erreicht, ist die Resonanzfrequenz des primärseitigen Schwingkreises.

Anhand dieser Messergebnisse wird nun ein Betriebsparameter für das Primärgerät 10 eingestellt beziehungsweise gespeichert. Beispielsweise kann eine Betriebsfrequenz beziehungsweise eine Startfrequenz für eine induktive Leistungsübertragung eingestellt werden, die insbesondere bei der Resonanzfrequenz liegt. Alternativ oder zusätzlich können weitere Betriebsparameter eingestellt werden, wie vorliegend beschrieben, etwa Schwellenwerte für eine Freigabe der Versorgung einer sekundärseitigen Last oder für eine Fremdobjekterkennung.

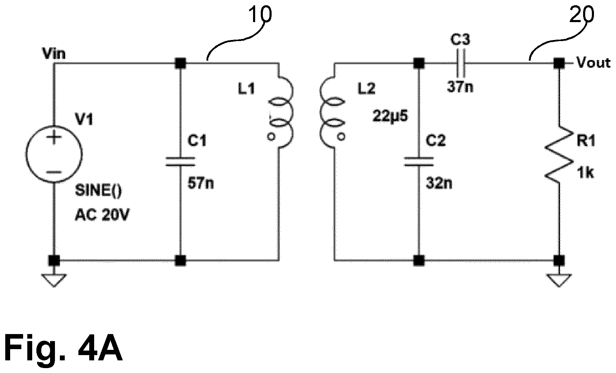

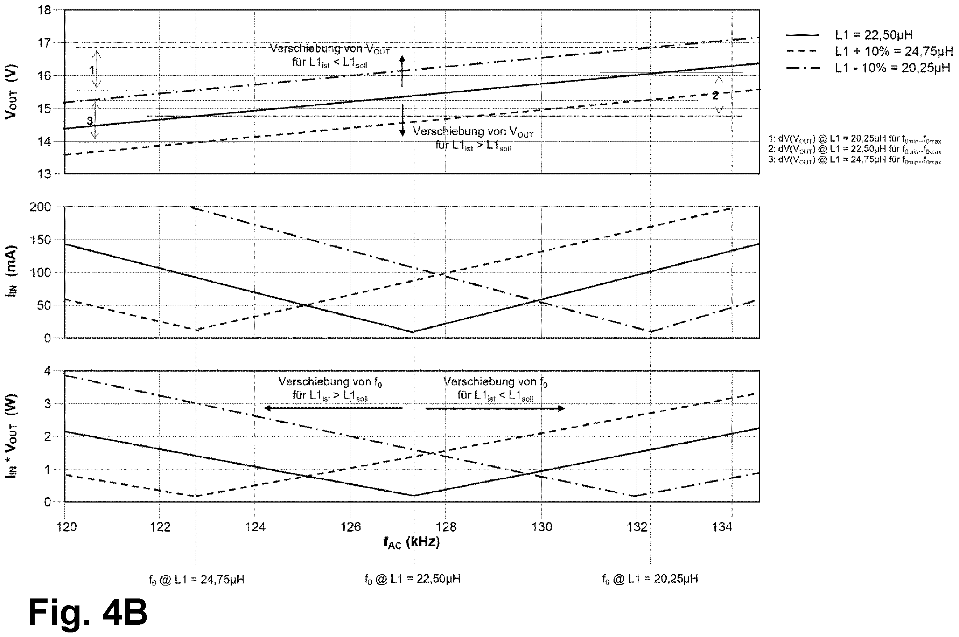

Mit Bezug zu den Fig. 4A und 4B werden ein Ersatzschaltbild und simulierte Messdaten für ein unbekanntes Primärgerät, das mit einem bekannten Sekundärgerät gekoppelt ist, erläutert. Dabei wird von den obigen Erläuterungen ausgegangen.

Bei dem in Fig. 4A gezeigten Fall umfasst das Primärgerät 10 - ähnlich wie bereits oben mit Bezug zu Fig. 3A erläutert - einen Parallelschwingkreis. Dieser umfasst eine Spule mit einer Induktivität L1 und einen Kondensator mit einer Kapazität C1 von 57 nF. Bei dem Beispiel wird dieser Schwingkreis angeregt mit einer Ansteuerfrequenz f_{AC}, wobei ein sinusförmiges Ansteuersignal mit 20 V Spannung angelegt wird.

Das Sekundärgerät 20 umfasst ebenfalls eine Spule mit einer Induktivität L2, die bei diesem Beispiel 22,50 µH beträgt, sowie einen dazu parallel geschalteten Kondensator mit der Kapazität C2 von 32 nF. Ferner ist ein weiterer Serienkondensator C3 mit der Kapazität 37 nF nach dem Resonanzschwingkreis vorgesehen und der Sekundär-Schwingkreis ist über einen Widerstand R1 von 1 kΩ kurzgeschlossen. Der Widerstand R1 repräsentiert dabei in vereinfachter Weise die komplexe Impedanz Z des in Fig. 1 angegebenen Erschatzschaltbildes. Dies ermöglicht die (Vergleichs-)Messung der Spannung Vout für die verschiedenen Resonanzkreiskonfigurationen (L +/- 10%). Ein Wert von R1 = 1 kΩ entspricht in guter Näherung dem realen Verhalten der Vorrichtung.

Zur Vereinfachung wird zwischen dem Primärgerät 10 und dem Sekundärgerät 20 von einem Abstand D von 0 mm ausgegangen. Insbesondere bezieht sich der Wert des Abstands D = 0 mm auf den Abstand zwischen den Frontkappen der in den Geräten 10, 20 vergossenen Koppler. Die Frontspulen haben hierbei typischerweise einen tatsächlichen Abstand von etwa 3 mm zueinander.

Bei den Diagrammen der Fig. 4B werden die Verläufe der sekundärseitigen Ausgangsspannung Vₒᵤₜ in V, des primärseitigen Eingangsstroms I_{IN} in mA beziehungsweise des Produkts aus diesen beiden Werten in W in Abhängigkeit von der Ansteuerfrequenz f_{AC} gezeigt.

Die drei gezeigten Kurven entsprechen den Ergebnissen einer Simulation mit einer Induktivität L1 von 22,50 µH, 20,25 µH beziehungsweise 24,75 µH. Dies entspricht einer Induktivität von 22,50 µH plus oder minus 10%, was ungefähr einer üblichen Fertigungstoleranz für ein entsprechendes Bauteil entspricht.

Den Diagrammen der Fig. 4B ist zu entnehmen, dass die drei Kurven unterschiedliche Minima des Eingangsstroms I_{IN} in Abhängigkeit von der Ansteuerfrequenz f_{AC} aufweisen, nämlich bei einer umso niedrigeren Frequenz, je größer die Induktivität L1 ist. Dabei entspricht die Frequenz f_{AC}, bei der die primärseitige Eingangsstromstärke **I**_{IN} ihr Minimum erreicht, jeweils der systemspezifischen Resonanzfrequenz.

Aus den Kurven ist ferner zu entnehmen, dass sich der Verlauf der Ausgangsspannung Vₒᵤₜ mit wachsender Induktivität L1 nach unten verschiebt. Die Differenzen sind seitlich angedeutet.

Anhand dieser Messergebnisse wird nun ein Betriebsparameter für das Primärgerät 10 und/oder das Sekundärgerät 20 eingestellt beziehungsweise gespeichert. Beispielsweise kann eine Betriebsfrequenz beziehungsweise eine Startfrequenz für eine induktive Leistungsübertragung eingestellt werden, die insbesondere bei der Resonanzfrequenz liegt. Alternativ oder zusätzlich können weitere Betriebsparameter eingestellt werden, wie vorliegend beschrieben, etwa Schwellenwerte für eine Freigabe der Versorgung einer sekundärseitigen Last oder für eine Fremdobjekterkennung.

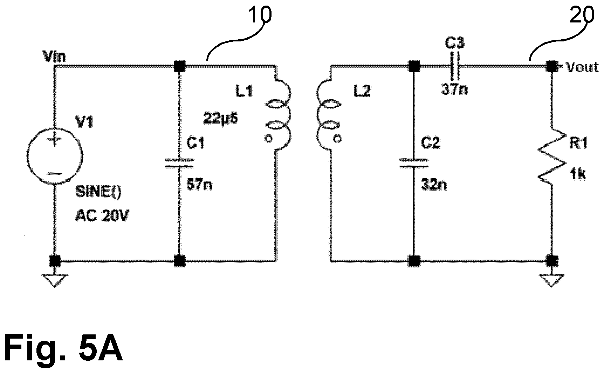

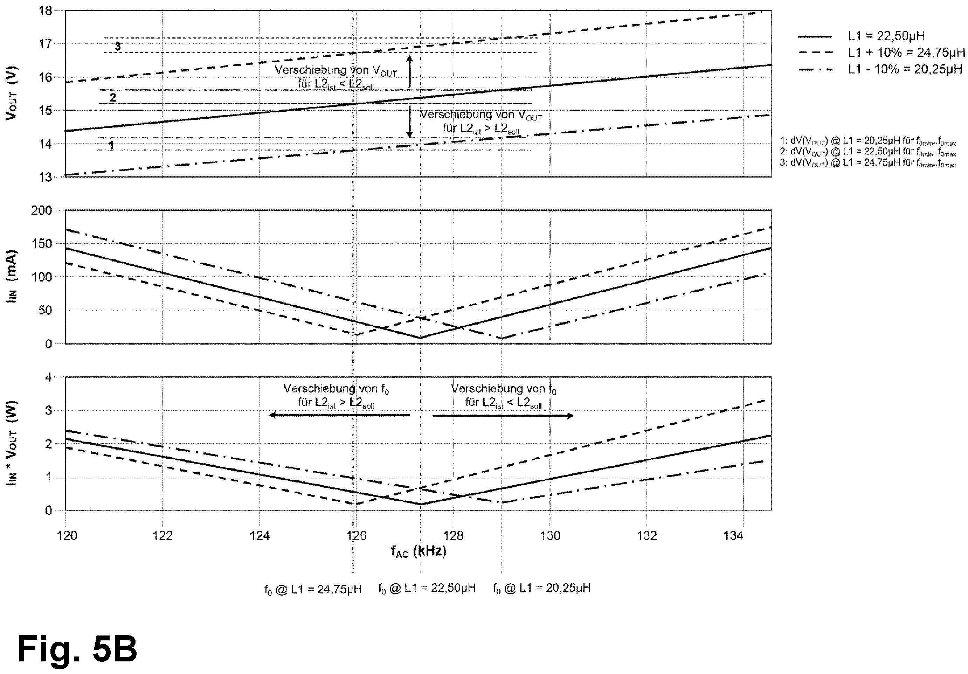

Mit Bezug zu den Fig. 5A und 5B werden ein Ersatzschaltbild und simulierte Messdaten für ein bekanntes Primärgerät, das mit einem unbekannten Sekundärgerät gekoppelt ist, erläutert. Dabei wird von den obigen Erläuterungen ausgegangen.

Bei dem in Fig. 5A gezeigten Fall umfasst das Primärgerät 10 einen Parallelschwingkreis mit einer mit einer Induktivität L1 von 22,50 µH und einen Kondensator mit einer Kapazität C1 von 57 nF. Der Primär-Schwingkreis wird angeregt mit einer Ansteuerfrequenz f_{AC}, wobei ein sinusförmiges Ansteuersignal mit 20 V Spannung angelegt wird.

Das Sekundärgerät 20 umfasst ebenfalls eine Spule mit einer Induktivität L2 sowie einen dazu parallel geschalteten Kondensator mit der Kapazität C2 von 32 nF. Ferner ist ein weiterer Serienkondensator C3 mit einer Kapazität von 37 nF nach dem Resonanzschwingkreis vorgesehen und der Sekundär-Schwingkreis ist über einen Widerstand R1 von 1 kΩ kurzgeschlossen. Wie bereits oben erläutert, repräsentiert der Widerstand R1 dabei in vereinfachter Weise die komplexe Impedanz Z.

Zur Vereinfachung wird zwischen dem Primärgerät 10 und dem Sekundärgerät 20 von einem Abstand D von 0 mm ausgegangen. Auch hier bezieht sich der Abstands D auf den Abstand zwischen den Frontkappen der vergossenen Koppler, sodass sich typischerweise ein tatsächlicher Abstand von etwa 3 mm ergibt.

Bei den Diagrammen der Fig. 5B werden die Verläufe der sekundärseitigen Ausgangsspannung Vₒᵤₜ in V, des primärseitigen Eingangsstroms I_{IN} in mA beziehungsweise des Produkts aus diesen beiden Werten in W in Abhängigkeit von der Ansteuerfrequenz f_{AC} gezeigt.

Die drei gezeigten Kurven entsprechen den Ergebnissen einer Simulation mit einer Induktivität L2 von 22,50 µH, 20,25 µH beziehungsweise 24,75 µH. Dies entspricht einer Induktivität von 22,50 µH plus oder minus 10%, was ungefähr einer üblichen Fertigungstoleranz für ein entsprechendes Bauteil entspricht.

Den Diagrammen der Fig. 5B ist zu entnehmen, dass die drei Kurven unterschiedliche Minima des Eingangsstroms I_{IN} in Abhängigkeit von der Ansteuerfrequenz f_{AC} aufweisen, nämlich bei einer umso niedrigeren Frequenz, je größer die Induktivität L2 ist. Dabei entspricht die Frequenz f_{AC}, bei der die primärseitige Eingangsstromstärke I_{IN} ihr Minimum erreicht, der systemspezifischen Resonanzfrequenz.

Aus den Kurven ist ferner zu entnehmen, dass sich der Verlauf der Ausgangsspannung Vₒᵤₜ mit wachsender Induktivität L2 nach oben verschiebt. Die Differenzen sind seitlich angedeutet.

Anhand dieser Messergebnisse wird nun ein Betriebsparameter für das Primärgerät 10 und/oder das Sekundärgerät 20 eingestellt beziehungsweise gespeichert. Beispielsweise kann eine Betriebsfrequenz beziehungsweise eine Startfrequenz für eine induktive Leistungsübertragung eingestellt werden, die insbesondere bei der Resonanzfrequenz liegt. Alternativ oder zusätzlich können weitere Betriebsparameter eingestellt werden, wie vorliegend beschrieben, etwa Schwellenwerte für eine Freigabe der Versorgung einer sekundärseitigen Last oder für eine Fremdobjekterkennung.

Zusammengefasst können die folgenden Fälle bei der Umsetzung der Erfindung unterschieden werden: Es können die Eigenschaften eines Primärschwingkreises in einem nicht gekoppelten Zustand ermittelt werden (vgl. Fig. 3A, 3B), es können die Eigenschaften eines Primärschwingkreises in einem gekoppelten Zustand mit einer bekannten Sekundärseite ermittelt werden (vgl. Fig. 4A, 4B) oder es können die Eigenschaften eines Sekundärschwingkreises in einem gekoppelten Zustand mit einer bekannten Primärseite ermittelt werden(vgl. Fig. 5A, 5B). Ferner können die Eigenschaften eines unbekannten Kopplersystems im gekoppelten Zustand ermittelt werden (nicht eigens gezeigt). Dabei sind charakteristische Parameter zur Auswertung der Schwingkreiseigenschaften die Resonanzfrequenz f₀, der Eingangsstrom I_{IN} in den Schwingkreis der Primärseite und/oder die Ausgangsspannung Vₒᵤₜ aus dem Schwingkreis der Sekundärseite.

Die Parameter können unter den folgenden Testbedingungen ermittelt werden:
- Um die charakteristische Resonanzfrequenz des Primär- und Sekundärschwingkreises zu ermitteln, wird die Ansteuerfrequenz f_{AC} des Primärschwingkreises variiert und es werden Messungen des Eingangsstroms I_{IN} in den Primärschwingkreis sowie der Ausgangsspannung Vₒᵤₜ des Sekundärschwingkreises ausgewertet.
- Der Abstand D zwischen Primär- und Sekundärseite ist konstant (D = 0 mm).
- Es findet keine Versorgung eines an der Sekundärseite angeschlossenen Verbrauchers statt, das heißt, die Sekundärseite befindet sich im Leerlauf.
- Der Primärschwingkreis wird mit der maximalen Zwischenkreisspannung versorgt, bei dem Beispiel 20 V Gleichspannung.

### Bezugszeichenliste

- 10: Primär-Schwingkreis; Primärgerät; Sender
- 20: Sekundär-Schwingkreis; Sekundärgerät; Empfänger
- 30: System

- C1, C2, C3: Kapazität
- D: Abstand
- f_{AC}: Anregungsfrequenz, Mess-Ansteuerfrequenz
- I_{IN}: Eingangsstromstärke
- L1, L2: Induktivität, Frontspuleninduktivität
- R1: Wirkwiderstand der Sekundärseite
- U_{Z}, Vₒᵤₜ: Spannungsabfall; Zwischenkreisspannung
- Z: Impedanz (Sekundärseite)

## Patentansprüche

1. Verfahren zum Einstellen zumindest eines Betriebsparameters einer Vorrichtung (10, 20, 30) zum induktiven Übertragen elektrischer Leistung, bei dem
zumindest ein Schwingkreis (10) der Vorrichtung mit einer Mess-Ansteuerfrequenz (f_{AC}) betrieben wird;
wobei die Mess-Ansteuerfrequenz (f_{AC}) über einen vorgegebenen Messbereich so variiert wird, dass eine Messreihe erfasst wird, wobei die Messreihe zumindest einen Betriebs-Messwert (I_{IN}, Vₒᵤₜ) in Abhängigkeit von der Mess-Ansteuerfrequenz betrifft;
in Abhängigkeit von der Messreihe ein Vorrichtungsparameter bestimmt wird; und
in Abhängigkeit von dem bestimmten Vorrichtungsparameter der Betriebsparameter bestimmt und eingestellt wird;
**dadurch gekennzeichnet, dass**
der Betriebsparameter eine Betriebsfrequenz für eine induktive Leistungsübertragung, zumindest einen Schwellenwert für einen Start und/oder ein Beenden der induktiven Leistungsübertragung und/oder zumindest einen Schwellenwert für eine Fremdobjekterkennung bei der induktiven Leistungsübertragung betrifft.

2. Verfahren gemäß Anspruch 1,
**dadurch gekennzeichnet, dass**
die Vorrichtung (10) als Primärgerät (10) ausgebildet ist, das als Sender zur induktiven Leistungsübertragung betreibbar ist, wobei das Primärgerät (10) insbesondere in einem ungekoppelten Zustand betrieben wird; oder
die Vorrichtung als System (30) mit einem Primärgerät (10) und einem Sekundärgerät (20) ausgebildet ist, die als Sender und Empfänger zur induktiven Leistungsübertragung betreibbar sind.

3. Verfahren gemäß Anspruch 2,
**dadurch gekennzeichnet, dass**
der Schwingkreis (10) der Vorrichtung als Primär-Schwingkreis des Primärgeräts (10) ausgebildet ist;
wobei optional der Schwingkreis (10) in einem ungekoppelten Zustand oder in einem gekoppelten Zustand betrieben wird.

4. Verfahren gemäß einem der vorhergehenden Ansprüche,
**dadurch gekennzeichnet, dass**
der Betriebs-Messwert (I_{IN}, Vₒᵤₜ) ein elektrischer Betriebs-Messwert ist; und
der Betriebs-Messwert (I_{IN}) insbesondere eine Primär-Eingangs-Stromstärke (I_{IN}) eines Primär-Geräts eines induktiven Kopplers und/oder eine Sekundär-Ausgangs-Spannung (Vₒᵤₜ) eines Sekundär-Geräts (20) eines induktiven Kopplers betrifft.

5. Verfahren gemäß einem der vorhergehenden Ansprüche,
**dadurch gekennzeichnet, dass**
der in Abhängigkeit von der Messreihe bestimmte Vorrichtungsparameter eine Resonanzfrequenz eines Primär-Schwingkreises (10) eines Primär-Geräts eines induktiven Kopplers betrifft;
wobei optional der Betriebs-Messwert (I_{IN}, Vₒᵤₜ) eine Primär-Eingangs-Stromstärke (I_{IN}) des Primär-Gerätes betrifft und anhand der Messreihe ein Minimum der Primär-Eingangs-Stromstärke (I_{IN}) bestimmt wird, um die Resonanzfrequenz zu bestimmen;
wobei optional das Minimum mittels eines mathematischen Fits der Messreihe bestimmt wird.

6. Verfahren gemäß einem der vorhergehenden Ansprüche,
**dadurch gekennzeichnet, dass** der Betriebsparameter anhand einer in einem Speicher abgelegten Tabelle oder Kurve oder anhand einer Berechnung in Abhängigkeit von dem Vorrichtungsparameter bestimmt wird.

7. Verfahren gemäß einem der vorhergehenden Ansprüche,
**dadurch gekennzeichnet, dass**
das Einstellen des Betriebsparameters in einer Firmware der Vorrichtung (10, 20, 30), in einem Steuergerät oder in einer weiteren Speichereinheit erfolgt, die insbesondere von der Vorrichtung (10, 30) umfasst ist.

8. Verfahren gemäß einem der vorhergehenden Ansprüche,
**dadurch gekennzeichnet, dass**
das Verfahren ausgeführt wird, wenn eine unbekannte Kombination eines Primärgeräts (10) mit einem Sekundärgerät (20) induktiv gekoppelt wird; und/oder
das Verfahren in vorgegebenen Zeitabständen oder auf ein Anforderungssignal wiederholt ausgeführt wird, wobei eine Zeitreihe des Betriebs-Messwerts erfasst und gespeichert wird.

9. Vorrichtung (10, 20, 30) zum induktiven Übertragen elektrischer Leistung; umfassend
einen Schwingkreis (10) und eine Steuereinheit; wobei
die Steuereinheit dazu eingerichtet ist, die Vorrichtung (10, 30) so anzusteuern, dass:
- der Schwingkreis (10) mit einer Mess-Ansteuerfrequenz (f_{AC}) betrieben wird;
- die Mess-Ansteuerfrequenz (f_{AC}) über einen vorgegebenen Messbereich variiert wird;
- eine Messreihe mit einem Betriebs-Messwert in Abhängigkeit von der Mess-Ansteuerfrequenz (f_{AC}) erfasst wird;
- in Abhängigkeit von der Messreihe ein Vorrichtungsparameter bestimmt wird; und
in Abhängigkeit von dem bestimmten Vorrichtungsparameter zumindest ein Betriebsparameter der Vorrichtung (10, 20, 30) bestimmt und eingestellt wird
**dadurch gekennzeichnet, dass**
der Betriebsparameter eine Betriebsfrequenz für eine induktive Leistungsübertragung, zumindest einen Schwellenwert für einen Start und/oder ein Beenden der induktiven Leistungsübertragung und/oder zumindest einen Schwellenwert für eine Fremdobjekterkennung bei der induktiven Leistungsübertragung betrifft.
